Europäisches Patentamt

**European Patent Office**

Office européen des brevets

(11) Numéro de publication: **0 038 229**
**B1**

(12) **FASCICULE DE BREVET EUROPEEN**

(45) Date de publication du fascicule du brevet:
**01.02.84**

(21) Numéro de dépôt: **81400364.6**

(22) Date de dépôt: **10.03.81**

(51) Int. Cl.³: **F 16 B 7/04, E 05 D 5/00**

(54) **Charnière d'articulation destinée à l'assemblage de deux panneaux, notamment pour articuler un panneau pivotant sur un panneau fixe.**

(30) Priorité: **11.04.80 FR 8008132**

(43) Date de publication de la demande:
**21.10.81 Bulletin 81/42**

(45) Mention de la délivrance du brevet:
**01.02.84 Bulletin 84/5**

(84) Etats contractants désignés:
**DE GB**

(56) Documents cités:
**GB - A - 643 565**
**US - A - 3 526 934**
**US - A - 4 066 373**

(73) Titulaire: **ATELIERS REUNIS, 13, rue de la Mairie B.P. No 47, F-67300 Schiltigheim (FR)**

(72) Inventeur: **Levy Joseph, Marc, 33, Allée de la Robertsau, F-67000 Strasbourg (FR)**

(74) Mandataire: **Tony-Durand, Serge, Cabinet Tony-Durand 22, Boulevard Voltaire, F-75011 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Charnière d'articulation destinée à l'assemblage de deux panneaux,
notamment pour articuler un panneau pivotant sur un panneau fixe

La présente invention a pour objet une charnière d'articulation, destinée à l'assemblage de deux panneaux, notamment pour articuler un panneau pivotant sur un panneau fixe, par exemple dans des conteneurs de stockage d'objets divers.

On connaî de nombreux dispositifs formant charnières d'articulation pour assurer l'assemblage de deux panneaux, par exemple un panneau articulé ou porte rabattable sur un panneau adjacent fixe, dans des conteneurs ou dans des chariots destinés à la manutention ou au stackage d'objets divers.

Ces dispositifs connus nécessitent tous des moyens de fixation auxiliaires, tels que vis ou rivets, et présentent l'inconvénient de ne pas assurer l'assemblage des panneaux de façon définitive et inviolable. En effet, il suffit de démonter les vis ou rivets de fixation des éléments de la charnière pour séparer les panneaux.

L'invention a pour but de remédier à cet inconvénient en réalisant une charnière d'articulation capable d'assembler deux pièces de façon définitiv et inviolable, et ce sans qu'il soit nécessaire d'y adjoindre des moyens de fixation auxiliaires, tels que les vis ou les rivets précités.

Conformément à l'invention, la charnière est constituée de deux demi-coquilles dans lesquelles sont ménagées des gorges complémentaires aptes à recevoir et à emprisonner des éléments tubulaires appartenant aux panneaux à assembler, et ces deux demi-coquilles peuvent être assemblées par emboîtement glissant au moyen étant en outre prévus pour verrouiller automatiquement les demi-coquilles ensemble en fin d'emboîtement de l'une sur l'autre.

Si l'assemblage de deux demi-coquilles au moyen d'un système tenons-mortaises est déjà connu de US-A-3 526 934, on notera toutefois qu'il s'agit ici de réaliser un dispositif d'éspacement dans un but tout différent.

Une fois les éléments tubulaires respectifs des deux panneaux à assembler engagés dans le gorges correspondantes formées sur l'une des deux demi-coquilles, il suffit d'emboîter la seconde demi-coquille sur la première en engageant les tenons de l'une dans les mortaises de l'autre, le verrouillage étant assuré automatiquement en fin de glissement de la deuxième demi-coquille sur la première.

Suivant un mode de réalisation de l'invention, l'une des deux demi-coquilles est munie de deux tenons longitudinaux formés le long de ses côtés opposés, et qui peuvent s'encastrer par glissement dans deux mortaises latérales constituées par des rainures correspondantes agencées dans la seconde demi-coquille.

Bien entendu, il est possible au lieu de réaliser deux tenons sur l'une des demi-coquilles et deux rainures correspondantes dans l'autre demi-coquille, de prévoir un tenon et une rainure sur chaque demi-coquille.

Suivant une caractéristique essentielle de l'invention, les moyens de verrouillage des deux demi-coquilles l'une sur l'autre comprennent au moins un ergot constitué d'une rampe inclinée, formée sur la face interne d'une demi-coquille, et un évidement correspondant ménagé dans l'autre demi-coquille de façon que, en fin de coulissement des tenons dans les rainures, l'extrémité de la rampe inclinée se déforme élastiquement par friction sur la demi-coquille associée et vienne s'encliqueter de manière irréversible dans l'évidement de celle-ci, en bloquant les deux demi-coquilles l'une sur l'autre.

Dans ces conditions, après verrouillage des deux demi-coquilles l'une sur l'autre, l'assemblage des deux panneaux retenus ensemble par cette charnière ne peut être défait que par destruction de cette dernière.

De préférence, la charnière est constituée en une matière plastique injectée présentant des caractéristiques appropriées, par exemple une polyamide.

D'autres particularités et avantages de l'invention apparaîtront au cours de la description qui va suivre.

Aux dessins annexés, donné à titre d'exemple non limitatif, on a représenté un mode de réalisation de la charnière selon l'invention.

— La figure 1 est une vue de dessus en plan d'une forme de réalisation de la charnière selon l'invention, assurant l'articulation d'un panneau ou d'une porte rabattable sur un panneau adjacent fixe.

— La figure 2 est une vue en panneaux de la figure 1.

— La figure 3 est un vue en élévation de la face intérieure de l'une des demi-coquilles visible à la figure 1.

— La figure 4 est une vue de dessus de la demi-coquille de la figure 3.

— La figure 5 est une vue en élévation de la demi-coquille des figures 3 et 4.

— La figure 6 est une vue de dessous de la demi-coquille de la figure 3.

— La figure 7 est une vue en élévation latérale suivant la flèche L de la demi-coquille de la figure 3.

— La figure 8 est une vue en coupe transversale suivant VIII-VIII de la figure 3.

— La figure 9 est une vue en coupe transversale suivant IX-IX de la figure 3.

— La figure 10 est une vue en élévation de la face interne de la seconde demi-coquille de la charnière, destinée à être fixée à la demi-coquille des figures 3 à 9.

— La figure 11 est une vue des dessous de la demi-coquille de la figure 10.

— La figure 12 est une vue de dessus de la demi-coquille de la figure 10.

— La figure 13 est une vue en élévation latérale de la demi-coquille de la figure 11 suivant la direction de la flèche M.

— La figure 14 est une vue en coupe transversale suivant XIV-XIV de la figure 10.

— La figure 15 est une vue en coupe transversale suivant XV-XV de la figure 10.

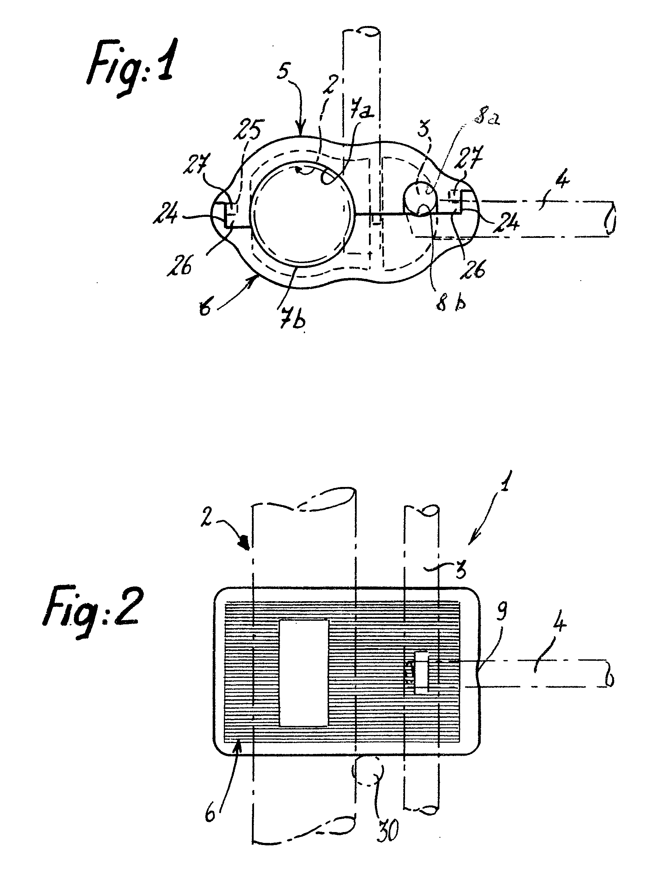

La charnière représentée aux figures 1 et 2 est destinée à assurer l'assemblage de deux panneaux, notamment pour articuler un panneau pivotant 1 ou porte rabattable sur un panneau adjacent fixe, dont on a seulement représenté un tube 2. Le panneau articulé 1, destiné à former une porte pivotante par rapport au panneau fixe, est constitué dans l'exemple décrit, par des fils métalliques, deux fils perpendiculaires 3, 4 de ce panneau 1 ayant été représentés. Le tube 2 a un diamètre beaucoup plus important que celui des fils métalliques soudés 3 et 4.

Le panneau fixe et le panneau articulé 1 peuvent appartenir par exemple à un conteneur de stackage d'objets divers.

La charnière d'articulation du panneau 1 mobile sur le tube 2 est constituée de deux demi-coquilles 5, 6, réalisées de préférence en une matière plastique injectée présentant des performances appropriées telle qu'une polyamide ou la matière plastique connue sous la marque commerciale »Delrin«.

Cependant, tout autre matériau présentant des caractéristique méchaniques similaires pourrait évidemment être utilisé.

Dans chaque demi-coquille 5, 6 sont formées des gorges complémentaires 7a, 7b et 8a, 8b, les deux gorges 7a et 7b étant semi-circulaires avec un rayon correspondant à celui du tube 2 qu'elles entourent lorsque les deux demi-coquilles sont fixées l'une à l'autre. La gorge 8a formée dans la demi-coquille 5, est destinée à recevoir le fil métallique 3, qui peut venir se loger presqu'entièrement à l'intérieur de cette gorge 8a. La gorge 8b associée à la demi-coquille 6 a corrélativement un rayon beaucoup plus faible que celui de la gorge 8a. La demi-coquille 6 présente en outre une gorge circulaire 9 perpendiculaire aux gorges 7b et 8b, et qui est agencées dans la partie médiane interne de la demi-coquille.

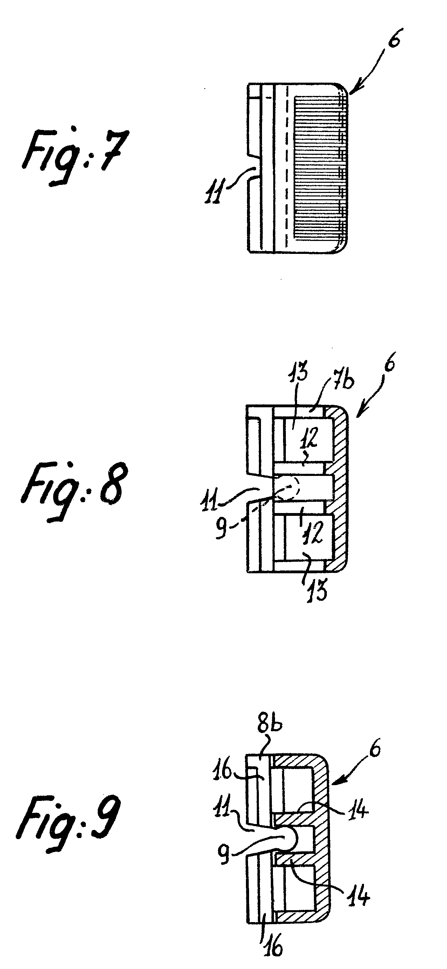

La gorge 9 débouche sur une ouverture d'entrée évasée 11 (figures 8 et 9) facilitant l'introduction du fil métallique 4 dans la gorge 9, qui est ouverte à l'une de ses extrémités pour permettre le passage du fil 4, et fermée à son extrémité opposée 9a afin que le fil 4 vienne en butée contre cette extrémité.

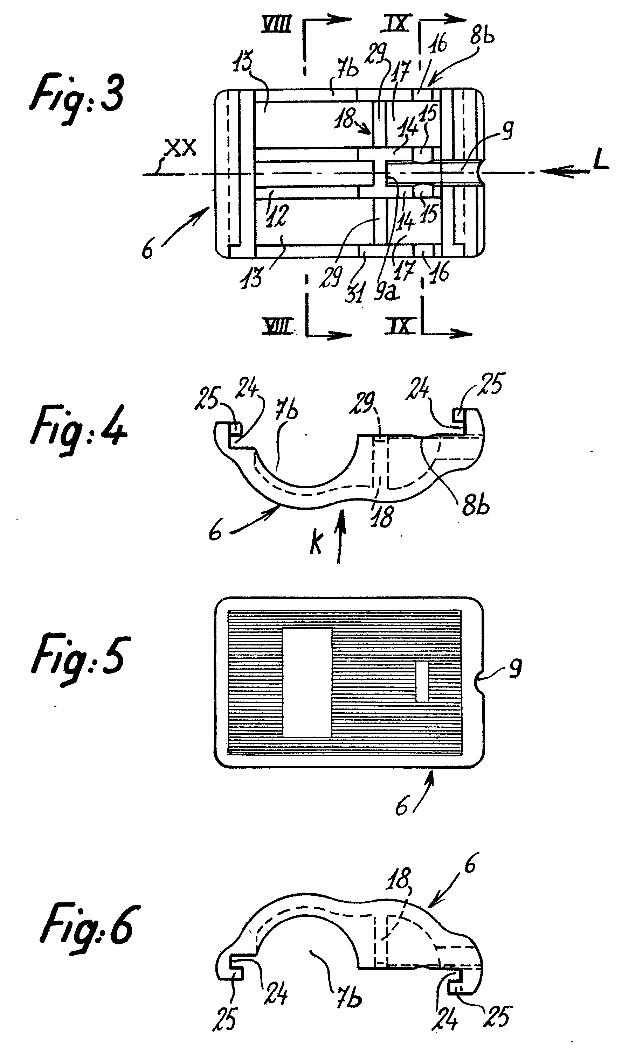

Au-delà des sections des gorges 7b, 8b, 9 la demi-coquille 6 est évidée afin de l'alléger, mais pourvue intérieurement de cloisons perpendiculaires entre elles. Ainsi deux cloisons parallèles 12 sont formées de part et d'autre de l'axe longitudinal X-X de la demi-coquille 6 et sont incurvées en correspondance avec le diamètre du tube 2, en délimitant entre elles un volume creux intercalaire et deux volumes latéraux 13 (figure 3). Les cloisons 12 se prolongent par deux cloisons 14 de moindre longueur, dans lesquelles sont ménagées des encoches arrondies 15 qui, placées dans le prolongement d'encoches analogues 16 agencées dans les parois longitudinales de la demi-coquille, constituent la gorge 8b. Les cloisons 14 délimitent entre elles un espace intercalaire creux, et sont bordées chacune par un volume creux ou alvéole 17. Enfin, la demi-coquille 6 est pourvue d'une cloison 18 perpendiculaire aux cloisons 12 et 14, et qui s'étend d'un côte à l'autre de la demi-coquille, entre les gorges 7b et 8b.

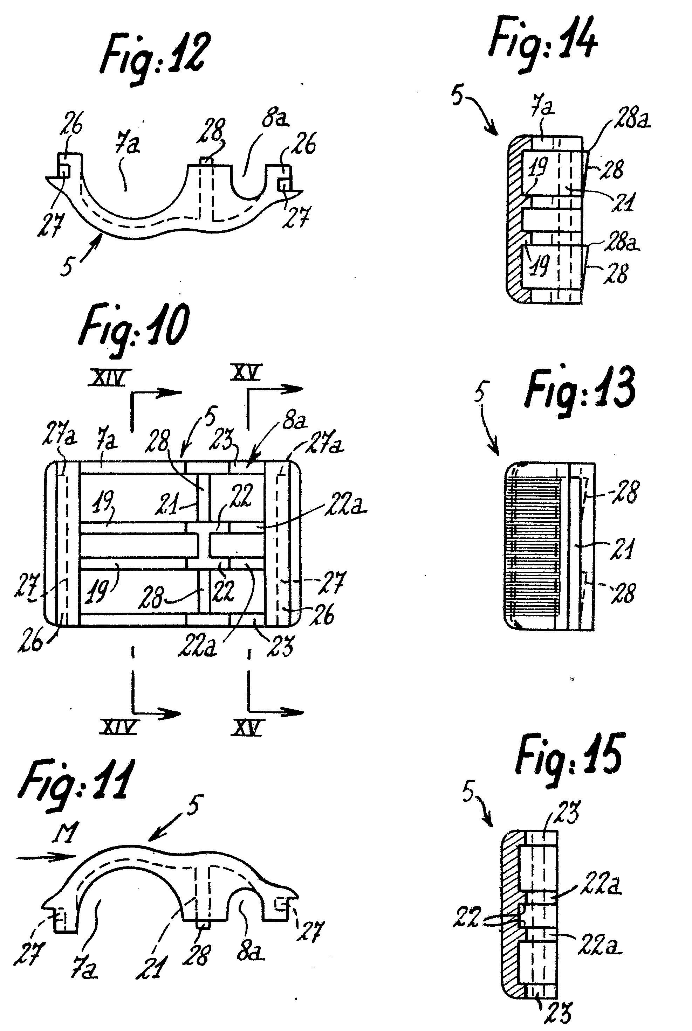

Comme on le voit aux figures 10 à 12, la demi-coquille complémentaire 5 présente un agencement comparable, avec deux cloisons longitudinales 19 s'étendant de part et d'autre de l'axe longitudinal X-X et une cloison perpendiculaire 21 s'étendant entre la gorge 7a et la gorge 8a. Les cloisons 19 sont incurvées en correspondance avec le contour du tube, afin de servir de nervures d'appui à celui-ci. De même, les cloisons 22 prolongeant les cloisons 19 sont pourvues d'encoches arrondies 22a qui, conjointement avec des encoches correspondantes 23 agencées dans les parois de la demi-coquille 5, constituent la gorge 8a.

Dans les deux demi-coquilles, l'ensemble formé par les diverses cloisons intérieures 12, 14, 18, d'une part et 19, 22, 21, d'autre part forme une armature assurant la solidité de la demi-coquille.

Suivant une caractéristique importante de l'invention, les deux demi-coquilles 5, 6 peuvent être assemblées par emboîtement glissant au moyen d'un système tenons-mortaises formé sur celles-ci. Dans l'exemple décrit, la demi-coquille 6 comporte deux mortaises 24 formées le long de ces côtés et parallèlement aux gorges 7b, 8b, ces mortaises étant constituées par des rainures paralleles entre et à l'axe des gorges 7b, 8b, et bordées par des becs extérieurs 25.

Corrélativement, la demi-coquille 5 est pourvue de tenons latéraux 26 formés le long des petits côtés de la demi-coquille, de part et d'autre des gorges 7a, 8a (figures 10 à 12). Ces tenons 26 ont en section la forme d'une languette et sont bordés chacun par une rainure 27, adaptée pour recevoir le bec 25 correspondant de la demi-coquille 6. Les rainures 27 débouchent sur l'extérieur de la demi-coquille 5, sont ouvertes à l'une de leurs extrémités et fermées à leurs extrémités opposées 27a, comme on le voit à la figure 10. Au contraire, les mortaises 24 sont tournées vers l'intérieur de la demi-coquille 6 et sont ouvertes à leurs deux extrémités, de sorte que lorsqu'on emboîte les tenons 26 dans les mortaises 24, et les becs longitudinaux 25 dans les rainures correspondantes 27, les extrémités 27a de ces dernières servent de butées d'arrêt à la demi-coquille 6 lorsque l'on a fait glisser celle-ci dans les mortaises 24 sur toute la longueur des rainures 27.

Suivant une caractéristique essentielle, l'invention prévoit des moyens pour verrouiller automatiquement les deux demi-coquilles 5, 6 ensemble, en fin d'emboîtement mutuel de celles-ci.

Dans le mode de réalisation décrit, ces moyens de verrouillage consistent en deux ergots 28 formés sur la face intérieure de la demi-coquille 5, et plus précisément sur les parties de la cloison transversale 21 situées de part et d'autre des cloisons longitudinales 19. Chaque ergot est lui-même constitué par une rampe inclinée (figures 13 et 14), tandis que complémentairement un évidement 29 correspondant à chaque ergot 28 est agencé dans les parties de la cloison transversale 18 de la demi-coquille 6, situées de part et d'autre des cloisons longitudinales 12 (figures 3 et 4). Les évidements 29 sont dimensionnés de façon à recevoir chacun une rampe inclinée lorsque les deux demi-coquilles sont complètement emboîtées l'une dans l'autre, la partie terminale 28a relevée de chaque ergot 28 ayant alors franchi les portions de paroi 31 de la demi-coquille 6, grâce à l'élasticité de la matière constituant la demi-coquille 5, mais après avoir forcé sur la demi-coquille 5 pour permettre le passage des ergots 28 et leur encliquetage élastique dans les évidements 29.

La mise en œuvre de la charnière constituée des deux demi-coquilles 5, 6 qui viennent d'être décrites se comprend aisément:

Le panneau pivotant 1 étant placée en position d'utilisation par rapport au panneau fixe dont on a repésenté un tube 2, on place de l'extérieur la demi-coquille 6 de façon qu'elle coiffe le tube fixe 2 par la gorge 7b, et le panneau 1 par les encoches 15, 16 constitutives de la gorge 8. La traverse horizontale 30 du panneau fixe, soudée au tube 2, sert d'appui vertical à la demi-coquille 6, et la gorge 9, perpendiculaire à la gorge 8b, maintient le panneau 1 à la hauteur appropriée par l'intermédiaire du fil métallique 4, noyée dans cette gorge 9 (figures 1 et 2).

On engage ensuite par l'arrière et par le haut les tenons latéraux 26 de la demi-coquille 5 dans les mortaises 24 correspondantes formées dans les retours de la demi-coquille 6, terminés par les becs 25. Ces derniers s'introduisent corrélativement dans les rainures 27 de la demi-coquille 5, de sorte que l'on peut faire glisser celle-ci vers le bas en emboîtant progressivement les tenons 26 dans les mortaises 24 et les becs 25 dans les rainures 27.

Au fur et à mesure que la demi-coquille 5 vient s'emboîter progressivement dans la demi-coquille 6, puis commence à s'engager au-dessus du second évidement similaire 29, en même temps que la seconde rampe.

En fin de glissement, il est nécessaire de forcer sur la demi-coquille 5, afin que les parties terminales relevées 28a puissant franchir les bords des évidement 29 et venir s'encastrer élastiquement dans ces derniers, en verrouillant complètement les deux demi-coquilles ensemble, et ce de façon inviolable. En effet, on comprend qu'une fois les ergots 28 bloqués sur élasticité dans les évidements 29, il n'est plus possible de séparer les deux demi-coquilles, de sorte que le panneau 1 pivotant reste assemblé au panneau fixe de façon pratiquement inviolable, la séparation ne pouvant être obtenue que par destruction de la charnière.

On a ainsi réalisé une charnière munie de moyens de blocage simples et efficaces et ce sans qu'il soit nécessaire de mettre en œuvre des organes de fixation auxiliaires, tels que des vis et des rivets comme dans les charnières habituelles.

Bien entendu, l'invention n'est pas limitée au mode de réalisation décrit et peut comporter des variantes d'exécution. Ainsi, la charnière peut ne comporter qu'un seul ergot 28 de verrouillage, associé à évidement correspondant 29. Il est également évident que les formes et le nombre des gorges agencées dans les demi-coquilles peuvent être quelconques, en fonction de la constitution des panneaux à assembler.

De même, la géométrie des tenons et des rainures correspondantes d'assemblage peut évidemment être quelconque.

## Revendications

1. Charnière d'articulation, destinée à l'assemblage de deux panneaux, notamment pour articuler un panneau pivotant sur un panneau fixe, -par exemple dans des conteneurs de stockage d'objets divers, caractérisée en ce qu'elle est constituée de deux demi-coquilles (5, 6) dans lesquelles sont ménagées des gorges (7, 8) complémentaires aptes à recevoir et à emprisonner des éléments tubulaires (2, 3) appartenant aux panneaux à assembler, et en ce que ces deux demi-coquilles (5, 6) peuvent être assemblées par emboîtement glissant au moyen d'un système tenons-mortaises (24—27) formés sur celles-ci, des moyens (28) étant en outre prévus pour verrouiller automatiquement les demi-coquilles (5, 6) ensemble en fin d'emboîtement de l'une sur l'autre.

2. Charnière selon la revendication 1, caractérisée en ce que l'une des demi-coquilles est munie de deux tenons (26) et de deux rainures (27) longitudinaux formés sur ses côtés opposés, qui coopèrent respectivement avec deux mortaises (24) et deux becs latéraux (25) conjugués, agencés dans la seconde demi-coquille.

3. Charnière selon l'une des revendications 1 et 2, caractérisée en ce que les moyens de verrouillage des deux demi-coquilles l'une sur l'autre comprennent au moins un ergot (28) constitué d'une rampe inclinée, formée sur la face interne d'une demi-coquille, et un évidement (29) correspondant ménagé dans l'autre demi-coquille de façon que, en fin de coulissement des tenons (26) dans les mortaises (24), l'extrémité de la rampe inclinée se déforme élastiquement par friction sur la demi-coquille associée et vienne s'encliqueter de manière irréversible dans l'évidement (29) de celle-ci en bloquant les deux demi-coquilles l'une sur l'autre, l'assemblage des deux panneaux retenus ensemble par cette charnière ne pouvant être défait que par destruction de cette dernière.

4. Charnière selon l'une des revendications 1 à 3, caractérisé en ce que deux des rainures au mortaises de réception des tenons ou becs sont ouvertes à l'une de leurs extrémités pour permettre l'introduction des tenons ou becs associés, et fermées à leurs extrémités opposées afin de former des butées d'arrêt au fin d'emboîtement d'une demi-coquille dans l'autre.

## Patentansprüche

1. Scharnier zum Verbinden zweier Paneele, insbesondere zum Verbinden eines drehbaren Paneels mit einem feststehenden Paneel, z. B. in einem Lagerbehälter für verschiedene Gegenstände, dadurch gekennzeichnet, daß er aus zwei Halbschalen (5, 6) gebildet ist, in welchen komplementäre Aussparungen zur Aufnahme und zum Umfassen rohrförmiger Bauelemente (2, 3) der zu verbindenden Paneele vorgesehen sind und dadurch, daß diese Halbschalen (5, 6) durch Ineinanderschieben verbindbar sind, wozu an diesen ein System von Verzahnungen (24 bis 27) vorgesehen ist, wobei die Einrichtungen (28) darüber hinaus die Halbschalen (5, 6) am Ende des Zusammenschiebens selbsttätig verriegeln.

2. Scharnier gemäß Anspruch 1, dadurch gekennzeichnet, daß eine der Halbschalen mit zwei Verzahnungen (26) und zwei auf gegenüberliegenden Seiten angeordneten Längsnuten (27) versehen ist, die mit zwei Nuten (24) und zwei seitlichen Zungen (25) in der zweiten Halbschale zusammenarbeitet.

3. Scharnier nach einem der Ansprüche 1 und 2, dadurch gekennzeichnet, daß die Verriegelungseinrichtungen der beiden Halbschalen mindestens eine aus einer geneigten Rampe gebildete Klaue (28) aufweist, die an der Innenseite einer Halbschale vorgesehen ist, und eine entsprechende Kammer (29) in der anderen Halbschale derart aufweist, daß am Ende des Zusammenschiebens der Verzahnungen (26) in die Nuten (24) sich das Ende der geneigten Rampe durch die Reibung an der zugeordneten Halbschale elastisch verformt und unlösbar in deren Kammer (29) einrastet, so daß die beiden Halbschalen gegeneinander verriegelt sind und die beiden von diesem Scharnier gehaltenen Paneele nur durch Zerstörung der Scharniere voneinander lösbar sind.

4. Scharnier nach einem der Ansprüche 1 bis 3, dadurch gekennzeichnet, daß die Nuten oder Aufnahmekammern für die Verzahnungen oder Zungen an einer ihrer Seiten zum Einführen der Verzahnungen oder Zungen offen und auf der gegenüberliegenden Seite geschlossen sind, damit Anschläge am Ende des Zusammenschiebens der beiden Halbschalen ineinander gebildet sind.

## Claims

1. Articulation hinge intended for the assembly of two panels, especially for articulating a pivoting panel on a fixed panel, for example within containers for the storage of various objects, characterized in that it is constituted by two half-shells (5, 6) in which are formed complementary channels (7, 8) in which are capable of receiving and of imprisoning tubular elements (2, 3) forming part of the panels to be assembled, and that these two half-shells (5, 6) can be assembled together by sliding engagement by means of a system of tenons and mortises (24—27) formed on these latter, means (28) being additionally provided for locking the half-shells (5, 6) together automatically on completion of engagement one over the other.

2. Hinge in accordance with claim 1, characterized in that one of the half-shells is provided with two tenons (26) and with two longitudinal grooves (27) formed on its opposite sides, which cooperate respectively with two mortises (24) and two corresponding lateral noses (25) arranged in the second half-shell.

3. Hinge in accordance with one of claims 1 and 2, characterized in that the means for locking the two half-shells one over the other comprise at least one lug (28) constituted by an inclined ramp formed on the internal face of one half-shell, and a corresponding recess (29) formed in the other half-shell in order to ensure that, at the end of sliding displacement of the tenons (26) within the mortises (24), the end of the inclined ramp undergoes elastic deformation by frictional contact with the associated half-shell and engages irreversible by snap action within the recess (29) of this latter and locks the two half-shells one over the other, the assembly formed by the two panels held together by this hinge being separable only by destruction of this latter.

4. Hinge in accordance with one of claims 1 to 3, characterized in that two of the groove or mortises for receiving the tenons or noses are open at one end in order to permit the introduction of the associated tenons or noses and are closed at their opposite ends in order to form stops at the end of engagement of one half-shell within the other.

Fig:1

Fig:2

0 038 229

**Fig: 3**

**Fig: 4**

**Fig: 5**

**Fig: 6**

9

Fig: 7

6

11

Fig: 8

13    7b    6

12

11

9

12

13

Fig: 9

8b

16

6

11

14

9

14

16

Fig:12

Fig:14

Fig:10

Fig:13

Fig:11

Fig:15